(19) Europäisches Patentamt
European Patent Office
Office européen des brevets

(11) **EP 4 534 352 A1**

(12) **EUROPEAN PATENT APPLICATION**

(43) Date of publication:
**09.04.2025 Bulletin 2025/15**

(21) Application number: **24203128.4**

(22) Date of filing: **27.09.2024**

(51) International Patent Classification (IPC):
**B60R 1/23** *(2022.01)* **B60R 1/27** *(2022.01)*

(52) Cooperative Patent Classification (CPC):
**B60R 1/27; B60R 1/23;** B60R 2001/1253

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.10.2023 JP 2023171427**

(71) Applicant: **CANON KABUSHIKI KAISHA Tokyo 146-8501 (JP)**

(72) Inventor: **NAKATANI, Tsubasa Tokyo, 146-8501 (JP)**

(74) Representative: **TBK Bavariaring 4-6 80336 München (DE)**

(54) **IMAGE CAPTURING APPARATUS AND MOVING BODY**

(57) An image capturing apparatus installable on a side of a movable apparatus comprises at least one image capturing unit capable of capturing an image of a first region to the rear of the movable apparatus and an image of a second region in a direction different from the rear of the movable apparatus, a half mirror disposed at a position at which an occupant of the movable apparatus can view an image to the rear of the movable apparatus, and a light-transmitting member, wherein an image of the first region is captured via the half mirror, and wherein an image of the second region is captured via the light-transmitting member.

FIG. 10

EP 4 534 352 A1

**Description**

BACKGROUND OF THE INVENTION

Field of the Invention

The present invention relates to an image capturing apparatus, a movable apparatus and the like.

Description of the Related Art

Conventionally, vehicles such as automobiles are provided with side mirrors (door mirrors) for checking the left and right rear. In contrast, in recent years, for the purpose of improving visibility in bad weather and reducing blind spots and the like, it is known to provide an electronic side mirror which captures images of the surroundings of a vehicle with an image capturing apparatus in place of a conventional side mirror consisting of a mirror, and to display an image generated by the image capturing apparatus on a liquid crystal monitor and the like.

In contrast, because there are drivers who find it difficult to grasp the angle of view and sense of distance in the images from an electronic side mirror compared to a side mirror, for example, as disclosed in Japanese Patent No. 3867385, there is also a configuration in which an image capturing apparatus serving as an object detection unit is stored in a side mirror.

However, in the conventional technology disclosed in the above-described Japanese Patent No. 3867385, the image capturing apparatus can only capture images to the rear. That is, the image capturing apparatus cannot capture images in the downward direction for creating overhead view images used for parking assistance and the like, nor can it capture forward images used for driving assistance such as detection of objects approaching from the front of the vehicle.

Therefore, in a case in which an image capturing apparatus is additionally installed to capture such images as described above, the installation space becomes a problem. For example, in a case in which an image capturing apparatus is additionally disposed on the side surface of a door or on the hood, there are various adverse effects on safety, design, and performance such as air resistance.

SUMMARY OF THE INVENTION

To achieve the above-described objective, an image capturing apparatus installable on a side of a movable apparatus according to one aspect of the present invention comprises:

at least one image capturing unit capable of capturing an image of a first region to the rear of the movable apparatus and an image of a second region in a direction different from the rear of the movable apparatus;
a half mirror disposed at a position at which an occupant of the movable apparatus can view an image to the rear of the movable apparatus; and
a light-transmitting member,
wherein an image of the first region is captured via the half mirror, and wherein an image of the second region is captured via the light-transmitting member.

Further features of the present invention will become apparent from the following description of embodiments with reference to the attached drawings.

BRIEF DESCRIPTION OF THE DRAWINGS

FIG. 1 is a diagram showing an example of the positional relationship between a vehicle 1000 and electronic side mirror 1R, and electronic side mirror 1L according to a First Embodiment.
FIG. 2 is a functional block diagram showing an example of the configuration of the electronic side mirror 1L according to the First Embodiment.
FIG. 3 is a cross-sectional view of the electronic side mirror 1L according to the First Embodiment when viewed from the top surface direction.
FIG. 4A and FIG. 4B are diagrams explaining examples of angle adjustment of the electronic side mirror 1 according to the First Embodiment.
FIG. 5 is a flowchart showing an example of a flow when adjusting the angle of the electronic side mirror 1 according to the First Embodiment.

FIG. 6 is a cross-sectional view of the electronic side mirror 1 according to the First Embodiment when viewed from the rear.

FIG. 7 is a functional block diagram showing an example of the configuration of the electronic side mirror 101 according to a Second Embodiment.

FIG. 8A and FIG. 8B are diagrams for explaining the optical characteristics of the optical system 103 according to the Second Embodiment.

FIG. 9A to FIG. 9C are diagrams showing examples of the positional relationship between a vehicle 2000 and an electronic side mirror 101L according to the Second Embodiment.

FIG. 10 is a cross-sectional view of the electronic side mirror 101L according to the Second Embodiment when viewed from the top surface direction.

FIG. 11 is a cross-sectional view of the electronic side mirror 101L according to the Second Embodiment when viewed from the rear.

DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

(First Embodiment)

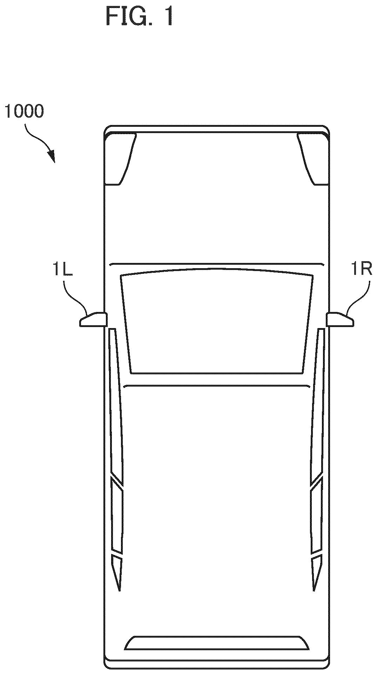

Hereinafter, an electronic side mirror 1 according to a First Embodiment of the present invention will be explained with reference to FIG. 1 to FIG. 6. FIG. 1 is a diagram showing an example of the positional relationship between a vehicle 1000 and electronic side mirror 1R and electronic side mirror 1L according to a First Embodiment.

As shown in FIG. 1, two electronic side mirrors 1R and 1L serving as image capturing apparatuses are installable on the sides of the vehicle 1000 serving as a movable apparatus according to the present embodiment. It should be noted that a movable apparatus is not limited to vehicles such as automobiles, and may be any object that is movable.

These two electronic side mirrors 1R and 1L have left-right symmetrical shapes and have equivalent functions. Therefore, in the following explanation, the electronic side mirror 1L on the left side in the traveling direction of the vehicle 1000 will be used as an example. Unless otherwise specified, the electronic side mirror 1R on the right side is assumed to be the same.

It should be noted that in the present embodiment, the traveling direction of the vehicle 1000 (the upper side in FIG. 1) is referred to as the front, and the opposite direction to the traveling direction (the lower side in FIG. 1) is referred to as the rear. In addition, the right side of the electronic side mirror 1L or the left side of the electronic side mirror 1R when viewed from the front is referred to as the side, the surface on the upper side when viewed from the front (the surface side of the sheet on which FIG. 1 is drawn) is referred to as the top surface direction, and the surface on the lower side when viewed from the front (the rear surface side of the sheet) is referred to as the bottom surface direction.

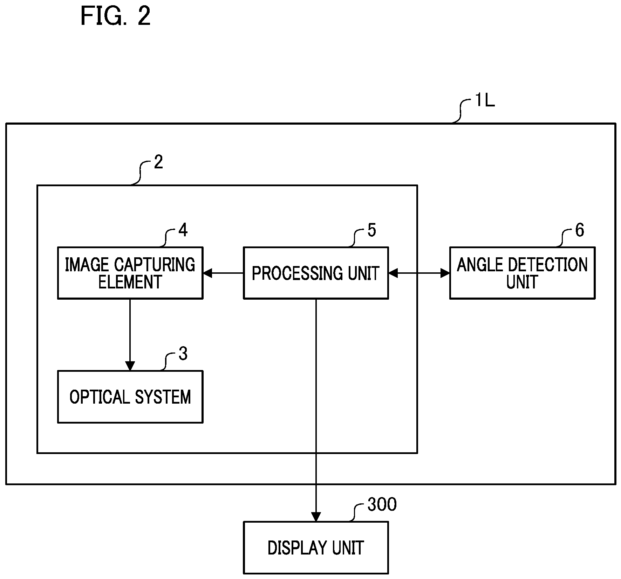

FIG. 2 is a functional block diagram showing an example of the configuration of the electronic side mirror 1L according to the First Embodiment. It should be noted that a part of the functional blocks shown in FIG. 2 is realized by executing a computer program stored in a memory serving as a storage medium (not shown) by a CPU and the like serving as a computer (not shown) included in the electronic side mirror 1L.

However, a part or all of the functional blocks may be realized by hardware. As hardware, a dedicated circuit (ASIC), a processor (reconfigurable processor or DSP), or the like may be used.

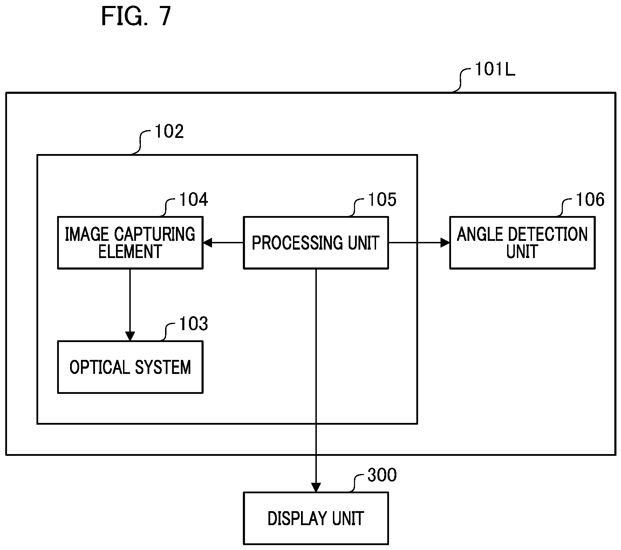

In addition, each of the functional blocks shown in FIG. 2 may not necessarily be incorporated in the same housing, and may be configured by separate devices that are connected to each other via a signal path. It should be noted that the above-described explanation regarding FIG. 2 similarly applies with respect to FIG. 7.

The electronic side mirror 1L incorporates at least one image capturing unit 2 serving as an object detection unit. The image capturing unit 2 includes an optical system 3, an image capturing element 4, and a processing unit 5. It should be noted that a because the electronic side mirror 1R has the same configuration as the electronic side mirror 1L, an explanation of the configuration of the electronic side mirror 1R is omitted.

The optical system 3 includes at least one lens and forms an image of light incident from a subject on a light-receiving surface (not shown) of the image capturing element 4. The image capturing element 4 converts an optical subject image formed by the optical system 3 into an electrical signal and transmits the electrical signal to the processing unit 5.

The processing unit 5, for example, is an SOC (System On Chip), an FPGA (Field Programmable Gate Array), and the like, and includes a CPU serving as a computer and a memory serving as a storage medium.

The CPU performs various controls of the entire system by executing a computer program stored in the memory. In addition, the processing unit 5 develops a video signal acquired from the image capturing element 4 and performs various image processing such as WDR (Wide Dynamic Range) correction, gamma correction, LUT (Lookup Table) processing, distortion correction, and cropping. The processing unit 5 may be provided in an information processing apparatus located away from the vehicle 1000.

Furthermore, the electronic side mirror 1L includes an angle detection unit 6 configured to detect that the electronic side mirror 1L has been angle-adjusted. The angle detection unit 6 is, for example, an encoder provided in the angle adjustment unit of the electronic side mirror 1L. An encoder is configured to detect mechanical angle changes of the angle adjustment mechanism with a sensor and transmits detection information, and the angle detection unit 6 transmits the detection information to the processing unit 5.

The processing unit 5 stores in advance in an internal memory (not shown) information on combinations of angles of the electronic side mirror 1L and the image capturing range that can be captured by an image capturing unit 2 at each angle. Therefore, it is possible for the processing unit 5 to calculate the necessary cropping range from the captured image based on the detection information with respect to the angle of the electronic side mirror 1L transmitted from the angle detection unit 6, and the processing unit 5 can perform various image processing such as cropping based on this calculation result.

In addition, the cropped image and the like are supplied to a display unit 300 and displayed as an image. This enables the driver of the movable apparatus to visually recognize the captured image or the image cropped from the captured image. The display unit 300 may be provided in the movable apparatus or may be provided in a terminal and the like for remotely controlling the movable apparatus from the outside. It should be noted that the electronic side mirror 1L serving as an image capturing apparatus in the present embodiment may be a system that includes the display unit 300 shown in FIG. 2.

It should be noted that the angle detection unit 6 may be a unit other than an encoder. For example, the angle detection unit 6 may be configured to receive information on position changes of a part of the vehicle 1000 captured by an image capturing unit 2 from the processing unit 5, calculate the angle change of the electronic side mirror 1L based on this information, and send the calculated angle change back to the processing unit 5.

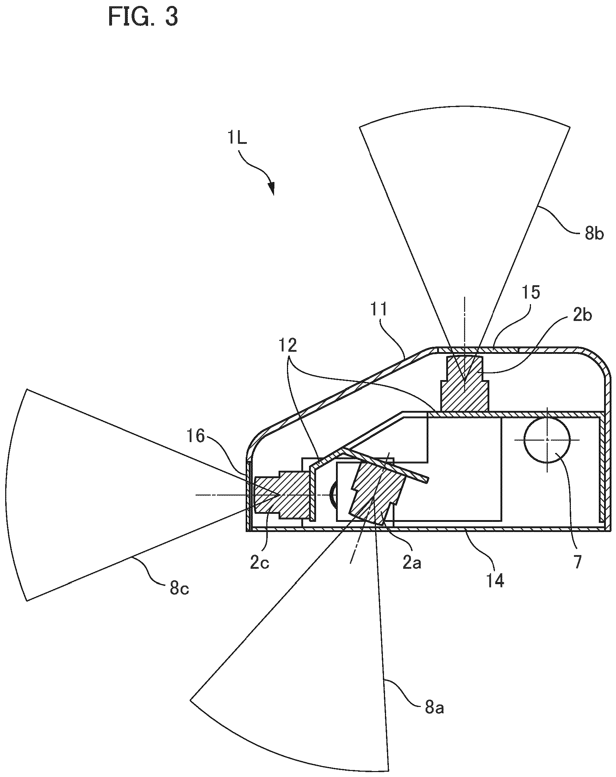

FIG. 3 is a cross-sectional view of the electronic side mirror 1L according to the First Embodiment when viewed from the top surface direction. It should be noted that, in FIG. 3, shapes not related to the explanation, for example, screws, holes for fixing parts, electrical wiring, and the like are omitted. In addition, in FIG. 3, similar to FIG. 1, the upper side of FIG. 3 is denoted as the front.

As shown in FIG. 3, the electronic side mirror 1L includes an optical mirror member 14 that displays the environment to the rear of the vehicle 1000, and a housing member 11 having an opening portion provided at the rear for housing the mirror member 14.

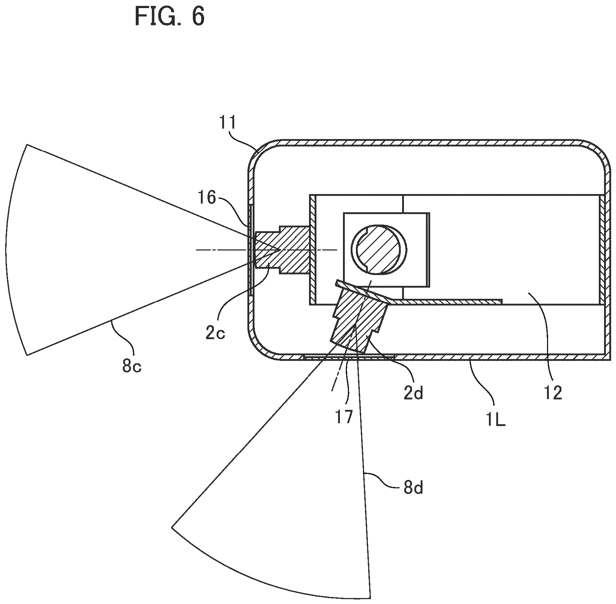

The electronic side mirror 1L includes a plurality of image capturing units 2a to 2d, and a holding member 12 for holding the plurality of image capturing units 2a to 2d. However, because the image capturing unit 2d is disposed on the lower side of the electronic side mirror 1L, the image capturing unit 2d is not shown in FIG. 3. However, the image capturing unit 2d is shown in FIG. 6 described later. An image capturing range 8a corresponds to the horizontal angle of view of the image capturing unit 2a, an image capturing range 8b corresponds to the horizontal angle of view of the image capturing unit 2b, an image capturing range 8c corresponds to the horizontal angle of view of the image capturing unit 2c, and an image capturing range 8d corresponds to the horizontal angle of view of the image capturing unit 2d.

It should be noted that each of the image capturing units 2a to 2d has the configuration of the image capturing unit 2 shown in FIG. 2. Although in the example shown in FIG. 3, three image capturing units are provided, image capturing units may include an image capturing unit 2a (first image capturing unit) for capturing images to the rear of the movable apparatus (first region) and a second image capturing unit for capturing images in directions other than to the rear (second region). That is, it is sufficient if the image capturing units are capable of capturing images to the rear of the movable apparatus for the first region and in a direction other than to the rear of the movable apparatus for the second region.

In addition, the second image capturing unit may include at least one of the image capturing units 2b to 2d. That is, the second region may include at least one of a region in front of the movable apparatus, a region to the side of the movable apparatus, and a region in the direction of the road surface relative to the movable apparatus.

Among the plurality of image capturing units 2a to 2c, the image capturing unit 2a is disposed such that the image capturing range 8a of the image capturing unit 2a is directed to the rear of the electronic side mirror 1L. Furthermore, the part of the mirror member 14 that overlaps with the image capturing range 8a, or the entire surface, is formed of a half mirror serving as a light-transmitting member, enabling the image capturing unit 2a to capture images to the rear of the vehicle 1000 through the mirror member 14.

In addition, the image capturing unit 2b is disposed such that the image capturing range 8b of the image capturing unit 2b is directed to the front of the electronic side mirror 1L. Furthermore, in the electronic side mirror 1L, a light-transmitting member 15 is disposed at a position overlapping with the image capturing range 8b. It should be noted that, the half mirror is disposed at a position on the side of the movable apparatus at which an occupant of the movable apparatus can view an image to the rear of the movable apparatus, and functions as an optical side mirror.

That is, the above-described first region is image captured via the half mirror, and the second region is image captured via the light-transmitting member. Thereby, a configuration is provided in which the image capturing unit 2b is capable of capturing images to the front of the vehicle 1000 through the light-transmitting member 15, and it is possible to capture images for use in driving assistance such as object detection to the front of the vehicle.

The light-transmitting member 15 may be configured by a half mirror similar to the mirror member 14, or may be configured by other light-transmitting materials, for example, transparent or translucent resin and the like. It should be noted that in a case in which a light-transmitting member 16 is configured by a half mirror, because the existence of the image capturing unit 2b can be hidden from the outside, the light-transmitting member 16 is also effective for crime prevention purposes such as parking surveillance.

In addition, the image capturing unit 2c is disposed such that the image capturing range 8c of the image capturing unit 2c is directed to the side away from the electronic side mirror 1L. Furthermore, in the electronic side mirror 1L, the light-transmitting member 16 is disposed at a position overlapping with the image capturing range 8c.

Thereby, a configuration is provided in which the image capturing unit 2c is capable of capturing images to the side of the vehicle 1000 through the light-transmitting member 16, and the image capturing unit 2c is usable for side monitoring or as a proximity sensor. The light-transmitting member 16 may be configured by a half mirror similar to the mirror member 14, or may be configured by other light-transmitting materials, for example, transparent or translucent resin and the like. In addition, by configuring the light-transmitting member 16 as a half mirror, because the existence of the image capturing unit 2c can be hidden from the outside, the image capturing unit 2c is also effective for crime prevention purposes such as parking surveillance.

In addition, the electronic side mirror 1L includes an angle adjustment mechanism 7. The angle adjustment mechanism 7 is configured by, for example, a vertical rotation axis and a drive motor (not shown), and can be adjusted to an optimal angle when the driver of the vehicle confirms the rear view by using the mirror member 14 of the electronic side mirror 1L.

In addition, when parking and the like, the electronic side mirror can be rotated 90 degrees counterclockwise from the state shown in FIG. 3 to a stored state. However, in a case in which the angle of the electronic side mirror 1L is adjusted by the angle adjustment mechanism 7, there is a possibility that the image capturing range 8 of an image capturing unit 2 may change in conjunction with the angle change.

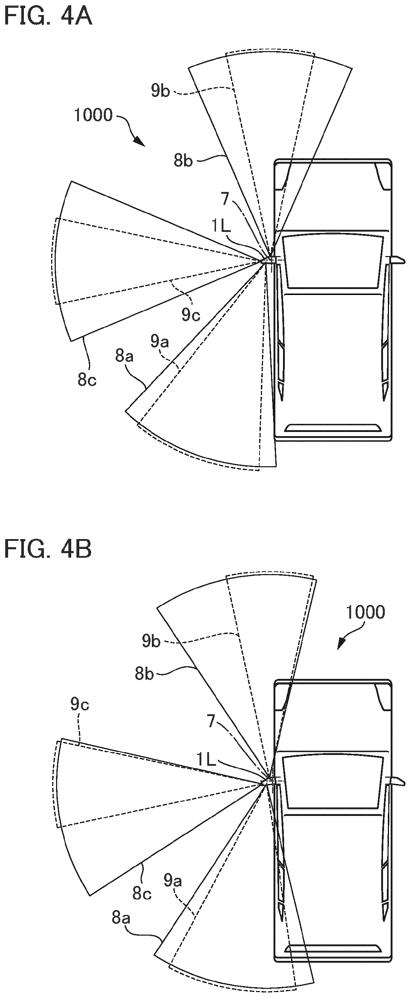

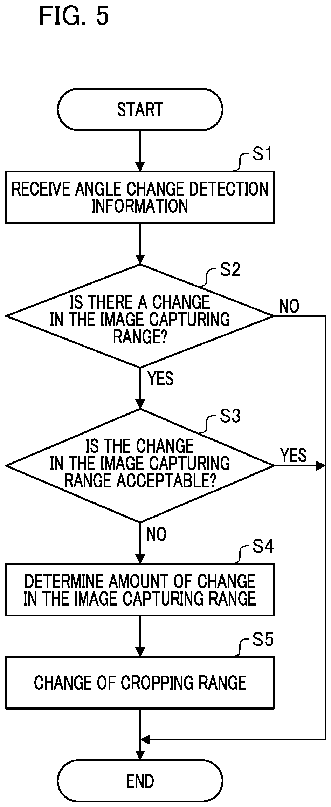

Hereinafter, a case in which the angle of the electronic side mirror 1L is adjusted by the angle adjustment mechanism 7 will be explained with reference to FIG. 4 and FIG. 5. FIG. 4A and FIG. 4B are diagrams explaining examples of angle adjustment of the electronic side mirror 1L according to the First Embodiment, and illustrate changes when the electronic side mirror 1L is horizontally rotated by using the angle adjustment mechanism 7.

FIG. 4A shows, for example, an initial state of the electronic side mirror 1L, and FIG. 4B shows a state in which the mirror member 14 is rotated counterclockwise by, for example, 10 degrees around the rotation axis of the angle adjustment mechanism 7 from the initial state, with the image capturing ranges 8a to 8c rotated 10 degrees counterclockwise.

In contrast, the horizontal angle of view cropped by the processing unit 5 is schematically shown as cropping ranges 9a to 9c. In the present embodiment, in a case in which the electronic side mirror 1L is rotated counterclockwise as shown in FIG. 4B, although the cropping range 9a for the image capturing range 8a is not changed, the cropping ranges 9b and 9c for the image capturing ranges 8b and 8c are changed.

FIG. 5 is a flowchart showing an example of a flow when adjusting the angle of the electronic side mirror 1L according to the First Embodiment, and FIG. 5 shows the operation flow of the processing unit 5 when the angle is changed from FIG. 4A to FIG. 4B. It should be noted that the operations of each step in the flowchart of FIG. 5 are performed sequentially by the CPU serving as a computer in the processing unit 5 executing a computer program stored in the memory.

First, in the initial state of FIG. 4A, cropping range 9a is cropped from the image capturing range 8a, cropping range 9b is cropped from the image capturing range 8b, and cropping range 9c is cropped from the image capturing range 8c. These cropping ranges 9 are assumed to be adjusted in advance so as to be optimal for each use (for example, front monitoring, side monitoring, and rear monitoring). In addition, the cropping ranges 9 are stored in advance in a memory (not shown) within the processing unit 5 in association with the angle of the initial state of the electronic side mirror 1L.

Furthermore, based on the state of FIG. 4A, the driver operates an operation unit (not shown) to adjust to an optimal angle when confirming the rear view by using the mirror member 14 of the electronic side mirror 1L in response to changes in the external environment and the like. Thereby, the electronic side mirror 1L is rotated counterclockwise by, for example, 10 degrees. When the electronic side mirror 1L rotates, in step S1, the CPU in the processing unit 5 receives detection information regarding the rotation angle detected by a sensor from the angle detection unit 6.

Next, in step S2, the CPU of the processing unit 5 retrieves information on the combination of the angle of the electronic side mirror 1L and the image capturing range that can be captured by an image capturing unit 2 at that angle from the internal memory. Then, based on the information read from the memory and the detection information received in step S1, the CPU determines as to whether the image capturing range 8 has changed with respect to the vehicle body before and after the rotation.

It should be noted that, as shown in FIG. 4, the image capturing ranges 8a to 8c change in conjunction with the angle change of the entire electronic side mirror 1L. In a case in which the result is NO in step S2, the flow of FIG. 5 ends.

Next, in step S3, the CPU of the processing unit 5 determines whether the changes in each of the image capturing ranges 8a to 8c that occur in step S2 are acceptable. This determination is performed based on whether the changes in the image capturing ranges 8a to 8c are consistent with the intended use of the images.

For example, the cropping range 9a cropped from the image captured in the image capturing range 8a is used for the purpose of rear confirmation. Therefore, in a case in which the driver adjusts the angle for the purpose of rear confirmation, it is desirable for the image capturing range 8a and the cropping range 9a to also change in conjunction. That is, it is determined that the change in the image capturing range 8a is acceptable. In this case, the flow of FIG. 5 ends without changing the cropping range.

In contrast, because the intended use of the images for the cropping range 9b cropped from the image capturing range 8b and the cropping range 9c cropped from the image capturing range 8c is not rear confirmation, it is not desirable for the cropping ranges 9b and 9c to change in conjunction with the angle change for rear confirmation purposes. Therefore, the result is determined to be NO in step S3, and the processing proceeds to step S4.

In step S4, the CPU of the processing unit 5 determines to what extent the image capturing ranges 8b and 8c have changed based on the combination information of the angle of the electronic side mirror 1L and the image capturing ranges of the image capturing units 2b and 2c, and the detection information received in step S1. Then, in step S5, the CPU of the processing unit 5 reduces the effect of the angle change by moving the cropping ranges 9b and 9c in a direction that cancels out the changes in the image capturing ranges 8b and 8c.

In this manner, in the present embodiment, there is an angle adjustment mechanism configured to rotate with respect to the movable apparatus, and the processing unit 5 crops a part of the region from the image captured by the image capturing apparatus according to the amount of rotation of the image capturing apparatus.

That is, in the example shown in FIG. 4B, by the entire electronic side mirror 1L rotating counterclockwise by 10 degrees, the image capturing ranges 8b and 8c also rotate by about 10 degrees. Therefore, the effect of the angle change is reduced by moving the cropping ranges 9b and 9c to rotate clockwise by about 10 degrees, thereby maintaining the display angle of view. However, "maintaining the display angle of view" as mentioned here is not limited to maintaining a completely identical display angle of view. The display angle of view may have an error.

It should be noted that the electronic side mirror 1L may have a mechanism that is configured to perform tilt rotation in addition to the horizontal rotation (pan rotation) exemplified in FIG. 4, and in the case of tilt rotation, processing similar to that in FIG. 5 may be performed.

In addition, in a case in which the angle adjustment mechanism of the electronic side mirror 1L does not rotate the entire electronic side mirror 1L, and instead is a mechanism that is configured to drive only the mirror member 14 independently, there is no effect on the image capturing range 8. Therefore, in step S2, it is determined that there is no change in the image capturing range 8 before and after rotation, and the above-described change in the cropping range is not performed.

However, in a case in which an image capturing unit 2 is configured to be fixed to the mirror member 14, there may be an effect on the image capturing range 8 even when the mirror member 14 rotates independently without rotation of the entire electronic side mirror 1L. In this case, it is desirable for the processing unit 5 to change the cropping range as necessary.

FIG. 6 is a cross-sectional view of the electronic side mirror 1L according to the First Embodiment when viewed from the rear, wherein the lower side is referred to as the bottom surface direction and the left side is referred to as the side direction.

As shown in FIG. 6, the image capturing range 8d of the image capturing unit 2d of the electronic side mirror 1L is disposed so as to include the bottom surface direction of the electronic side mirror 1L, particularly a tire surrounding portion that includes the front wheel (not shown) of the vehicle 1000 and the road surface.

Furthermore, the electronic side mirror 1L includes a light-transmitting member 17 at a position overlapping with the image capturing range 8d. Thereby, a configuration is provided in which the image capturing unit 2d is capable of capturing images in the bottom surface direction of the vehicle 1000 through the light-transmitting member 17, and it is possible to use the image capturing unit 2d when creating an overhead view image for parking assistance and the like.

The light-transmitting member 17 may be configured by a half mirror similar to the mirror member 14, or may be configured by other light-transmitting materials, for example, transparent or translucent resin and the like. In addition, by configuring the light-transmitting member 17 as a half mirror, because the existence of the image capturing unit 2d can be hidden from the outside, the image capturing unit 2d is also effective for crime prevention purposes such as parking surveillance.

Similar to the image capturing ranges 8a to 8c, in a case in which the angle of the electronic side mirror 1L is adjusted by the angle adjustment mechanism 7, there is a possibility that the image capturing range 8d may change in conjunction with the angle change. Therefore, it is desirable for the processing unit 5 to change the cropping range as necessary.

(Second Embodiment)

In the First Embodiment, a configuration for reducing blind spots by disposing a plurality of image capturing units 2 within the electronic side mirror 1L was explained. In a Second Embodiment, an example configuration in which a single wide-angle image capturing unit 102 is disposed within the electronic side mirror 101L will be explained.

Explanations of points that are the same as in the First Embodiment will be omitted or simplified. In addition, in the following explanation, the electronic side mirror 101L on the left side in the traveling direction of a vehicle 2000 will be explained as an example. However, because the electronic side mirror 101R on the right side has the same configuration as the electronic side mirror 101L and has a left-right symmetrical configuration with respect to the electronic side mirror 101L, an explanation thereof will be omitted.

Hereinafter, an electronic side mirror 101L according to a Second Embodiment of the present invention will be explained with reference to FIG. 7 to FIG. 11. FIG. 7 is a functional block diagram showing an example of the configuration of the electronic side mirror 101L according to the Second Embodiment. The electronic side mirror 101L is provided with an image capturing unit 102 serving as an object detection unit, and the image capturing unit 102 includes an optical system 103, an image capturing element 104, and a processing unit 105.

The optical system 103 includes at least one lens, and light incident from a subject is incident on a light-receiving surface (not shown) of the image capturing element 104, and forms an optical image. The image capturing element 104 converts an optical subject image formed by the optical system 103 into an electrical signal and transmits the electrical signal to the processing unit 105.

Furthermore, the electronic side mirror 101L includes an angle detection unit 106 configured to detect the angle in a case in which the electronic side mirror 101L is angle-adjusted. The angle detection unit 106 is, for example, an encoder provided in the angle adjustment unit of the electronic side mirror 101L, similar to the angle detection unit 6 of the First Embodiment, and because the details of the angle adjustment are the same as in the First Embodiment, an explanation thereof will be omitted. In addition, because the display unit 300 is the same as in the First Embodiment, an explanation thereof will be omitted.

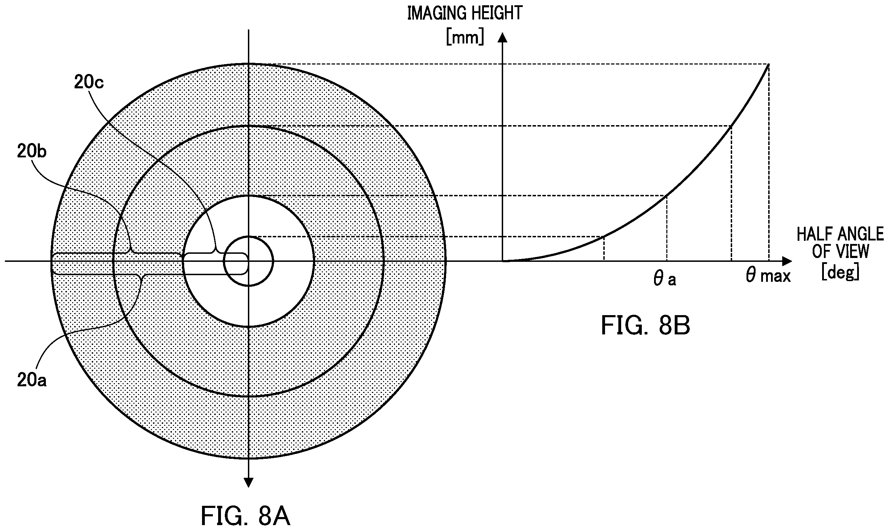

Next, details of the optical characteristics of the optical system 103 included in the image capturing unit 102 will be explained. FIG. 8A and FIG. 8B are diagrams for explaining the optical characteristics of the optical system 103 according to the Second Embodiment, wherein FIG. 8A is a diagram showing contour lines of the image height y at each half angle of view on the light-receiving surface of the image capturing element of the optical system 103.

In addition, FIG. 8B is a diagram showing the projection characteristic representing the relationship between the image height y, which is the image formation height, and the half angle of view $\theta$ of the optical system 103. In FIG. 8B, the half angle of view (angle formed between the optical axis and the incident light ray) $\theta$ is shown on the horizontal axis, and the image formation height (image height) y on the light-receiving surface (image surface) of the image capturing unit 102 is shown on the vertical axis.

As shown in the projection characteristic of FIG. 8B, the optical characteristics of the optical system 103 have a different projection characteristic $y(\theta)$ in a region where the half angle of view $\theta$ is small (near the optical axis) and a region in which the half angle of view $\theta$ is large (region away from the optical axis). That is, when the resolution is defined as the increase in image height y per unit half angle of view $\theta$ (that is, the number of pixels per unit angle), the resolution differs depending on the region.

This local resolution can also be expressed by the differential value $dy(\theta)/d\theta$ of the projection characteristic $y(\theta)$ at the half angle of view $\theta$. That is, the larger the slope of the projection characteristic $y(\theta)$ in FIG. 8B, the higher the resolution. In addition, it can be said that the larger the interval between the image heights y at each half angle of view in the contour lines in FIG. 8A, the higher the resolution.

In the present embodiment, the region near the center (where the half angle of view $\theta$ is less than a predetermined half angle of view $\theta a$) formed on the light-receiving surface of the sensor when the half angle of view $\theta$ is less than the predetermined half angle of view $\theta a$ is referred to as a low-resolution region 20c, and the outer region where the half angle of view $\theta$ is equal to or greater than the predetermined half angle of view $\theta a$ is referred to as a high-resolution region 20b.

In addition, 20a indicates the overall image capturing range (full angle of view). It should be noted that the low-resolution region 20c is a high-distortion region, and the high-resolution region 20b is a low-distortion region. It should also be noted that in the example, although the low-resolution region 20c and the high-resolution region 20b of the optical system 103 are configured concentrically, the low-resolution region 20c and the high-resolution region 20b need not be concentric, and for example, each region may have a distorted shape.

In addition, the center of gravity of the low-resolution region 20c and the center of gravity of the high-resolution region 20b need not coincide, and furthermore, may be offset from the center of the light-receiving surface. In the optical system of the present embodiment, the low-resolution region 20c may be formed on the central side of the light-receiving surface of the image capturing element, and the high-resolution region 20b may be formed on the peripheral side of the light-receiving surface.

In this manner, the optical system in the Second Embodiment forms an optical image of the first resolution in the central region of the light-receiving surface of the image capturing element, and forms an optical image of the second resolution, which is higher than the first resolution, in the peripheral region, which is the periphery of the central region. In addition, the optical system forms at least an optical image of the first region in the peripheral region.

It should be noted that the optical system 103 of the present embodiment is configured to satisfy the following equation (Equation 1), in which f is defined as the focal length, $\theta$ as the half angle of view, y as the image height on the image surface, $y(\theta)$ as the projection characteristic representing the relationship between the image height y and the half angle of view $\theta$, and $\theta$max as the maximum half angle of view of the optical system.

$$0.2 < 2 \times f \times \tan(\theta\text{max}/2) \, / \, y(\theta\text{max}) < 0.92 \; ... \; \text{(Equation 1)}$$

In an optical system having such optical characteristics, the magnification in the radial direction with respect to the optical axis can be adjusted by adjusting the projection characteristic $y(\theta)$.

Thereby, because the aspect ratio in the radial direction and the circumferential direction with respect to the optical axis can be controlled, unlike conventional fisheye lenses and the like, a high-resolution image with little distortion in the peripheral region can be obtained while having a wide angle of view.

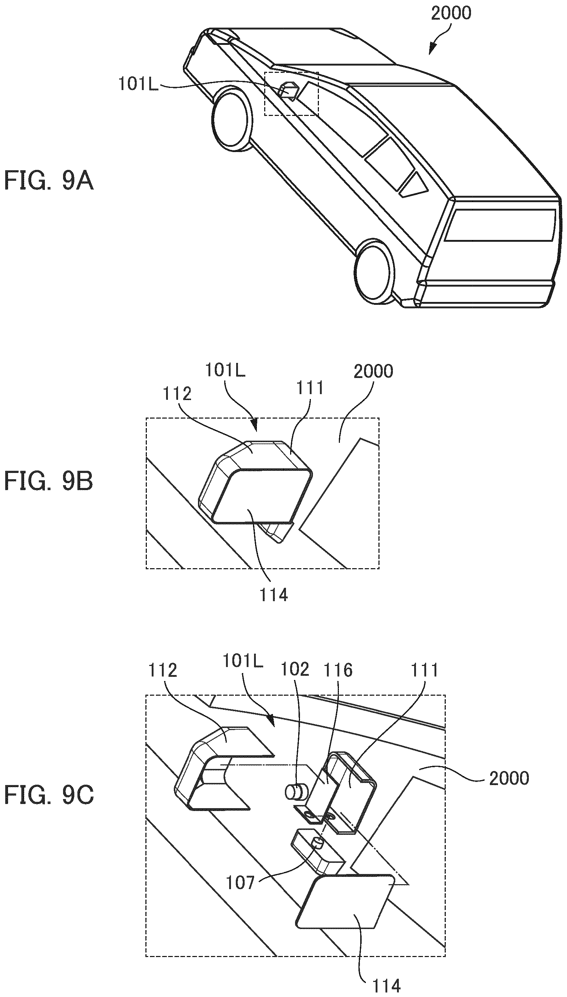

FIG. 9A to FIG. 9C are diagrams showing examples of the positional relationship between the vehicle 2000 and the electronic side mirror 101L according to the Second Embodiment, wherein FIG. 9A is a perspective view showing the vehicle 2000 according to the Second Embodiment.

In addition, FIG. 9B is an enlarged view of the area surrounding the electronic side mirror 101L in FIG. 9A, and FIG. 9C is an exploded perspective view of the electronic side mirror 101L of FIG. 9B. It should be noted that in FIG. 9A to FIG. 9C, shapes not related to the explanation, for example, screws, holes for fixing parts, electrical wiring, and the like are omitted.

As shown in FIG. 9A to FIG. 9C, the electronic side mirror 101L includes an optical mirror member 114 that is configured to display the environment to the rear of the vehicle 2000, and a base member 111 that is rotatably attached to the vehicle 2000 by a shaft portion 107 for the angle adjustment mechanism. In addition, the electronic side mirror 101L includes a cover 112 formed of a light-transmitting member, an image capturing unit 102, a holding member 116 for holding the image capturing unit 102, and the like.

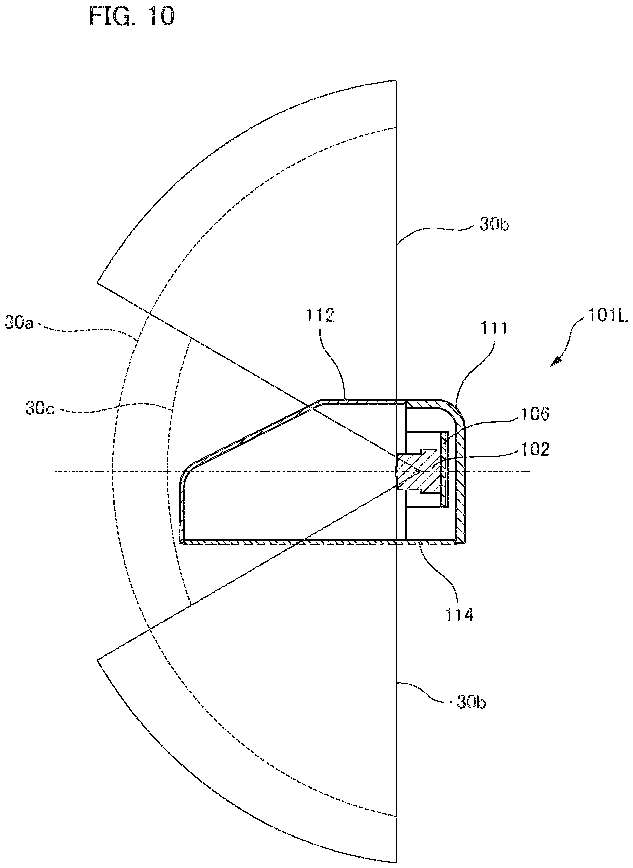

FIG. 10 is a cross-sectional view of the electronic side mirror 101L according to the Second Embodiment when viewed from the top surface direction. An overall image capturing range 30a schematically shows the horizontal angle of view of the image capturing unit 102. It should be noted that a high-resolution image capturing range 30b is the range captured by the high-resolution region 20b of the image capturing unit 102, and a low-resolution image capturing range 30c is the range captured by the low-resolution region 20c of the image capturing unit 102.

In addition, the overall image capturing range 30a corresponds to the overall image capturing range (full angle of view) 20a of the image capturing unit 102. In addition, in FIG. 10, similar to FIG. 1, the upper side is referred to as the front.

The image capturing unit 102 is disposed such that the mirror member 114 formed as a half mirror overlaps with the high-resolution image capturing range 30b to the rear. Therefore, a configuration is provided in which the image capturing unit 102 is capable of capturing images to the rear of the vehicle 2000 through the mirror member 114 by the high-resolution image capturing range 30b to the rear.

Furthermore, in the electronic side mirror 101L, the cover 112 formed of a light-transmitting member is disposed in a range overlapping with the high-resolution image capturing range 30b to the front. Thereby, a configuration is provided in which the image capturing unit 102 is capable of capturing images to the front of the vehicle 2000 through the cover 112 by the high-resolution image capturing range 30b to the front. That is, the second region includes a region to the front of the movable apparatus, and the optical system forms an optical image of at least the region to the front of the movable apparatus within the second region in the peripheral region.

Therefore, the image capturing unit 102 can use the high-resolution image capturing range 30b to the front for driving assistance such as detection of objects approaching from the front. The cover 112 may be configured by a half mirror similar to the mirror member 114, or may be configured by other light-transmitting materials, for example, transparent or translucent resin and the like.

In addition, by configuring the cover 112 as a half mirror, because the existence of the image capturing unit 102 can be hidden from the outside, this configuration is also effective for crime prevention purposes such as parking surveillance.

The overall image capturing range 30a of the image capturing unit 102 also includes the side direction of the electronic side mirror 101L. Furthermore, the cover 112 configured by the light-transmitting member is disposed so as to also include a range overlapping with the region to the side of the electronic side mirror 101L within the overall image capturing range 30a of the image capturing unit 102.

That is, the second region includes the side direction of the movable apparatus, and the optical system forms an optical image of at least the side direction of the movable apparatus within the second region in the central region. Thereby, a configuration is provided in which the image capturing unit 102 is capable of capturing images to the side of the vehicle 2000 through the cover 112, and the image capturing unit 102 can be used for monitoring to the side or as a proximity sensor.

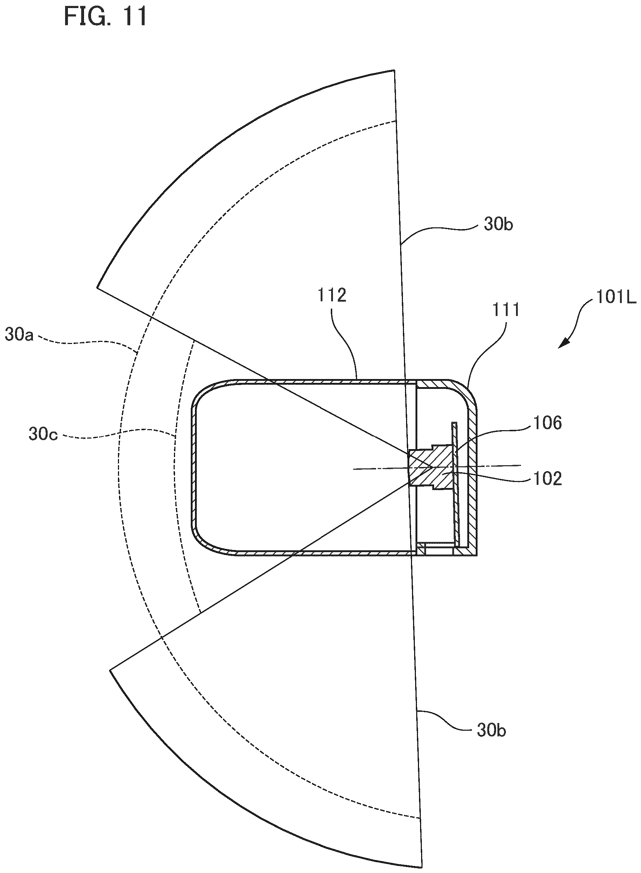

FIG. 11 is a cross-sectional view of the electronic side mirror 101L according to the Second Embodiment when viewed from the rear, wherein, similar to FIG. 6, the lower side is referred to as the bottom surface direction and the left side is referred to as the side direction.

The image capturing unit 102 is disposed such that the high-resolution image capturing range 30b in the bottom surface direction includes a tire surrounding portion that includes the front wheel (not shown) of the vehicle 2000 and the road surface. Furthermore, as shown in FIG. 11, in the electronic side mirror 101L, the cover 112 formed of a light-transmitting member is also disposed in a range overlapping with the high-resolution image capturing range 30b in the bottom surface direction.

That is, the second region includes a region in the direction of the road surface relative to the movable apparatus, and the optical system forms an optical image of at least the region in the direction of the road surface within the second region in the peripheral region. In addition, the optical system forms, in the peripheral region, an optical image of at least one of the front wheel or rear wheel of the movable apparatus and an optical image of the road surface, both of which are included in the second region.

Thereby, a configuration is provided in which the image capturing unit 102 is capable of capturing images in the bottom surface direction of the vehicle 2000 through the cover 112, and it is possible to use the image capturing unit 102 when creating an overhead view image for parking assistance and the like. Furthermore, a configuration is provided in which the image capturing unit 102 is also capable of capturing images in the top surface direction of the vehicle 2000 through the cover 112.

As explained in FIG. 10 and FIG. 11, in the Second Embodiment, the configuration is arranged so that one light-transmitting member (cover 112) is disposed in a range overlapping with at least the front direction, side direction, and bottom surface direction within the overall image capturing range 30a of the image capturing unit 102. However, the configuration may be such that separate windows of light-transmitting members are disposed in each direction, similar to the First Embodiment.

It should be noted that the movable apparatus in the embodiment may be any type of moving device that moves, for example, an automobile, a train, a ship, an airplane, and the like. In addition, the present invention can be applied to a case in which the movable apparatus is remotely controlled.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the image capturing apparatus and the like through a network or various storage media. Then, a computer (or a CPU, an MPU, or the like) of the image capturing apparatus and the like may be configured to read and execute the program. In such a case, the program and the storage medium storing the program configure the present invention.

In addition, the present invention includes those realized using at least one processor or circuit configured to perform functions of the embodiments explained above. For example, a plurality of processors may be used for distribution processing to perform functions of the embodiments explained above.

This application claims the benefit of priority from Japanese Patent Application No. 2023-171427, filed on October, 2, 2023 which is hereby incorporated by reference herein in its entirety.

## Claims

1. An image capturing apparatus installable on a side of a movable apparatus, the image capturing apparatus comprising:

   at least one image capturing unit capable of capturing an image of a first region to the rear of the movable apparatus and an image of a second region in a direction different from the rear of the movable apparatus;
   a half mirror disposed at a position at which an occupant of the movable apparatus can view an image to the rear of the movable apparatus; and
   a light-transmitting member,
   wherein an image of the first region is captured via the half mirror, and
   wherein an image of the second region is captured via the light-transmitting member.

2. The image capturing apparatus according to claim 1, wherein the at least one image capturing unit comprises a first image capturing unit configured to capture an image of the first region and at least one second image capturing unit configured to capture an image of the second region, and
wherein the second region includes at least one of a region to the front of the movable apparatus, a region to a side of the movable apparatus, and a region in the direction of a road surface relative to the movable apparatus.

3. The image capturing apparatus according to claim 1, wherein the at least one image capturing unit comprises an image capturing element and an optical system configured to form an optical image on a light-receiving surface of the image capturing element,

wherein the optical system forms an optical image of a first resolution in a central region of the light-receiving surface of the image capturing element, and forms an optical image of a second resolution, which is a resolution higher than the first resolution, in a peripheral region surrounding the central region, and
wherein the optical system forms, in the peripheral region, at least an optical image of the first region.

4. The image capturing apparatus according to claim 3, wherein the second region includes a region to the front of the movable apparatus, and
wherein the optical system forms, in the peripheral region, an optical image of at least the region to the front of the movable apparatus within the second region.

5. The image capturing apparatus according to claim 4, wherein the second region includes a region to a side of the movable apparatus, and
wherein the optical system forms, in the central region, an optical image of at least the region to a side of the movable apparatus within the second region.

6. The image capturing apparatus according to claim 3, wherein the second region includes a region in the direction of a road surface relative to the movable apparatus, and
wherein the optical system forms, in the peripheral region, an optical image of at least the region in the direction of the road surface within the second region.

7. The image capturing apparatus according to claim 6, wherein the optical system forms, in the peripheral region, an optical image of at least one of a front wheel or a rear wheel of the movable apparatus and an optical image of a road surface, each included in the second region.

8. The image capturing apparatus according to claim 1, comprising:

an angle adjustment mechanism configured to rotate with respect to the movable apparatus; and
at least one processor or circuit configured to function as:
a processing unit configured to crop a part of a region from an image captured by the image capturing apparatus according to an amount of the rotation.

9. A movable apparatus comprising:

the image capturing apparatus according to claim 1; and
a display unit configured to display an image that has been captured by the image capturing apparatus.

FIG. 1

FIG. 2

```
                                                              ┌─ 1L

   ┌──────────────────────────────────────────────────────────────┐
   │              ┌─ 2                                              │
   │   ┌──────────────────────────────────────────┐                │
   │   │                                           │                │
   │   │    ┌─ 4               ┌─ 5        ┌─ 6     │                │
   │   │  ┌─────────────┐  ┌──────────────┐     ┌──────────────┐    │
   │   │  │   IMAGE     │◄─│  PROCESSING  │◄───►│    ANGLE     │    │
   │   │  │  CAPTURING  │  │     UNIT     │     │  DETECTION   │    │
   │   │  │   ELEMENT   │  └──────────────┘     │     UNIT     │    │
   │   │  └─────────────┘         │             └──────────────┘    │
   │   │         │                │                                 │
   │   │         ▼     ┌─ 3       │                                 │
   │   │  ┌──────────────┐        │                                 │
   │   │  │   OPTICAL    │        │                                 │
   │   │  │    SYSTEM    │        │                                 │
   │   │  └──────────────┘        │                                 │
   │   └──────────────────────────┼─────────────────────────────────┘
   └──────────────────────────────┼────────────────────────────────┘
                                   │         ┌─ 300
                                   ▼
                           ┌──────────────┐
                           │ DISPLAY UNIT │
                           └──────────────┘
```

FIG. 3

FIG. 4A

FIG. 4B

# FIG. 5

```
                    ┌─────────────┐
                    │    START    │
                    └──────┬──────┘
                           │
                           ▼                    ⌐S1
          ┌──────────────────────────────────┐
          │  RECEIVE ANGLE CHANGE DETECTION  │
          │           INFORMATION            │
          └────────────────┬─────────────────┘
                           │
                           ▼              ⌐S2
                        ╱     ╲
                     ╱           ╲
                  ╱  IS THERE A     ╲      NO
                 ╱ CHANGE IN THE     ╲──────────┐
                 ╲ IMAGE CAPTURING   ╱          │
                  ╲    RANGE?       ╱           │
                     ╲           ╱              │
                        ╲  ▼  ╱                 │
                        YES                     │
                           │                    │
                           ▼              ⌐S3   │
                        ╱     ╲                  │
                     ╱           ╲               │
                  ╱   IS THE        ╲     YES     │
                 ╱  CHANGE IN THE    ╲───────────┤
                 ╲  IMAGE CAPTURING  ╱           │
                  ╲ RANGE ACCEPTABLE?╱           │
                     ╲           ╱               │
                        ╲  ▼  ╱                  │
                         NO                      │
                           │                     │
                           ▼            ⌐S4      │
          ┌──────────────────────────────────┐  │
          │   DETERMINE AMOUNT OF CHANGE     │  │
          │   IN THE IMAGE CAPTURING RANGE   │  │
          └────────────────┬─────────────────┘  │
                           │                     │
                           ▼            ⌐S5      │
          ┌──────────────────────────────────┐  │
          │     CHANGE OF CROPPING RANGE     │  │
          └────────────────┬─────────────────┘  │
                           │                     │
                           ▼◄────────────────────┘
                    ┌─────────────┐
                    │     END     │
                    └─────────────┘
```

FIG. 6

FIG. 7

```
                                                        ┌─101L
┌──────────────────────────────────────────────────────────────────┐
│                                                                    │
│        ┌─102                                                       │
│   ┌──────────────────────────────────────────────────┐            │
│   │                                                   │            │
│   │   ┌─104                ┌─105              ┌─106    │            │
│   │  ┌──────────────┐     ┌──────────────┐  ┌──────────────┐       │
│   │  │IMAGE CAPTURING│◄────│PROCESSING UNIT│──►│ANGLE DETECTION│     │
│   │  │   ELEMENT     │     │              │  │    UNIT       │       │
│   │  └──────────────┘     └──────────────┘  └──────────────┘       │
│   │         │                    │                   │            │
│   │         ▼   ┌─103            │                    │            │
│   │  ┌──────────────┐           │                     │            │
│   │  │OPTICAL SYSTEM │           │                     │            │
│   │  └──────────────┘           │                     │            │
│   └──────────────────────────────┼──────────────────────┘         │
│                                  │                                 │
│                                  ▼   ┌─300                         │
└──────────────────────────────────┼────────────────────────────────┘
                             ┌──────────────┐
                             │ DISPLAY UNIT │
                             └──────────────┘
```

FIG. 8A

FIG. 8B

FIG. 9A

FIG. 9B

FIG. 9C

FIG. 10

FIG. 11

Europäisches
Patentamt

European
Patent Office

Office européen
des brevets

# EUROPEAN SEARCH REPORT

Application Number

EP 24 20 3128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 383 315 A (CLARKE CHRISTOPHER DONALD [GB]; CLARKE MARGARET MARY [GB]) 25 June 2003 (2003-06-25) | 1,2,8,9 | INV. B60R1/23 B60R1/27 |
| Y | * page 2, line 12 - line 26; figure 2 * ----- | 3-7 | |
| X | US 2019/031102 A1 (KISHIMOTO KATSUHIKO [JP]) 31 January 2019 (2019-01-31) * paragraph [0065]; figure 2a * ----- | 1,2,8,9 | |
| Y | CN 115 883 776 A (CANON KK) 31 March 2023 (2023-03-31) * paragraph [0030]; figure 2a * ----- | 3-7 | |

TECHNICAL FIELDS
SEARCHED     (IPC)

B60R

The present search report has been drawn up for all claims

| Place of search | Date of completion of the search | Examiner |
|---|---|---|
| Berlin | 12 February 2025 | Wiberg, Sten |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  & : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 20 3128

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2025

| Patent document cited in search report | | Publication date | Patent family member(s) | | Publication date |
|---|---|---|---|---|---|
| GB 2383315 | A | 25-06-2003 | AU | 2002352403 A1 | 30-06-2003 |
| | | | EP | 1456058 A1 | 15-09-2004 |
| | | | GB | 2383315 A | 25-06-2003 |
| | | | WO | 03051672 A1 | 26-06-2003 |
| US 2019031102 | A1 | 31-01-2019 | CN | 108602465 A | 28-09-2018 |
| | | | JP | 6568603 B2 | 28-08-2019 |
| | | | JP | WO2017130439 A1 | 08-11-2018 |
| | | | TW | 201726452 A | 01-08-2017 |
| | | | US | 2019031102 A1 | 31-01-2019 |
| | | | WO | 2017130439 A1 | 03-08-2017 |
| CN 115883776 | A | 31-03-2023 | CN | 115883776 A | 31-03-2023 |
| | | | EP | 4155817 A1 | 29-03-2023 |
| | | | JP | 2023046930 A | 05-04-2023 |
| | | | US | 2023096414 A1 | 30-03-2023 |

EPO FORM P0459

For more details about this annex : see Official Journal of the European Patent Office, No. 12/82

**EP 4 534 352 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3867385 B

- JP 2023171427 A